# FASCICULE DE BREVET EUROPEEN

(11) **EP 0 469 979 B1**
(45) Date de publication et mention de la délivrance du brevet: **13.09.1995**
(21) Numéro de dépôt: 91402113.4
(22) Date de dépôt: 29.07.1991
(51) Int. Cl.: B60N 2/48

(54) **Appuie-tête électrique, notamment pour sièges de véhicules**
Elektrische Kopfstütze, insbesondere für Fahrzeugsitze
Electrical headrest, particularly for vehicle seats

(30) Priorité: 30.07.1990 FR 9009689
(43) Date de publication de la demande: 05.02.1992
(73) Titulaire: BERTRAND FAURE AUTOMOBILE "B.F.A.", F-91300 Massy (FR)
(72) Inventeur: Hamelin, Bruno, F-91080 Courcouronnes (FR)
(74) Mandataire: Picard, Jean-Claude Georges

(56) Documents cités:
- DE-A- 3 136 648
- DE-A- 3 519 351
- DE-A- 3 805 957

## Description

La présente invention concerne un appuie-tête électrique, notamment pour sièges de véhicules, comportant des moyens de fixation amovible, du type à broches coulissantes d'écartement standard, permettant son montage à la partie supérieure du dossier d'un siège, et associé à au moins un premier moteur électrique relié d'une part mécaniquement à une chaine de transmission de positionnement en hauteur d'un boitier porte-coussins et d'autre part, par une liaison électrique, à des organes de commande reliés à une source d'alimentation en courant et associés audit siège, à portée des mains de son occupant, ledit premier moteur électrique et la chaîne de transmission de positionnement en hauteur qui y est associée étant logés à l'intérieur dudit boîtier.

Un tel appuie-tête pourra ne comporter qu'un seul moteur électrique, par exemple pour la commande de sa position en hauteur ; il pourra cependant comporter aussi un second moteur, pour la commande de son inclinaison, par pivotement autour d'un axe horizontal. Par "moteur" il faut d'ailleurs entendre, en principe, un ensemble moteurpotentiomètre, l'axe duquel est couplé à l'arbre du moteur pour que la tension disponible sur son curseur fournisse une mémoire du positionnement en hauteur ou en inclinaison.

On connait déjà des appuie-tête de ce type (DE-A-3 805 957), dont le moteur et les organes associés (de transmission mécanique et autres) sont logés dans le dossier du siège, l'appuie-tête lui-même n'étant constitué que d'un coussin, pourvu de ses deux broches d'enfichage sur le dossier. Ce dernier est donc lourdement équipé, ce qui augmente systématiquement le prix des véhicules et rend plus difficile l'établissement d'un système d'options. L'option "véhicules avec ou sans appuie-tête électrique" se transforme en effet en option "véhicules avec ou sans dossier de siège équipé spécialement" (pour une commande électrique du positionnement de l'appuie-tête).

Par le document DE-A-3 519 351, on connaît un appuie-tête électrique contenant un moteur propre à l'entraîner pour en modifier la hauteur. Cependant l'arbre de ce moteur s'étend s'étend horizontalement dans l'appuie-tête, ce qui augmente beaucoup son encombrement en largeur à l'intérieur de ce dernier et impose l'adoption d'un renvoi d'angle dans la chaîne cinématique qui permet le réglage de l'appuie-tête en hauteur.

Le but de la présente invention est de remédier à ce type d'inconvénients et à cet effet, un appuie-tête du type général défini au début sera, conformément à la présente invention, essentiellement caractérisé en ce que ladite chaîne de transmission de positionnement comporte un système vis-écrou, ledit premier moteur électrique étant supporté par une embase de support montée coulissante sur deux tiges de guidage solidaires desdites broches, l'arbre dudit premier moteur s'étendant verticalement, et en ce que ladite liaison électrique aboutit à un connecteur propre à être branché sur une embase de connexion fixée à demeure à ladite partie supérieure du dossier, ce dernier ne contenant que la partie de ladite liaison électrique qui s'étend entre ladite embase et lesdits organes de commande.

Ainsi, au contraire de ce qui se rencontre dans la technique antérieure évoquée plus haut, c'est maintenant l'appuie-tête qui comporte le maximum d'organes, à savoir les organes essentiels, et le dossier du siège le minimum, à savoir uniquement les liaisons électriques indispensables entre l'embase de connexion et les organes de commande. On obtient ainsi un appuie-tête pratiquement autonome, intégré, constituant à lui seul un module optionnel. Il est même possible, grâce à l'invention, d'envisager de monter sur tous les véhicules des sièges dont le dossier soit prééquipé en ces embases de connexion et liaisons électriques, leur prix n'étant alors que très peu augmenté par rapport à celui des sièges ordinaires. De tels dossiers permettront encore, au choix du client, d'y monter soit un appuie-tête classique, à réglages manuels, soit un appuie-tête conforme à l'invention, à réglages électriques.

Cet appuie-tête peut encore comporter, en dessous et solidairement de ladite embase de support, un logement pour un second moteur électrique, d'axe horizontal, relié mécaniquement auxdites tiges de guidage, lesquelles sont respectivement articulées sur lesdites broches selon un axe virtuel horizontal, pour la commande de l'inclinaison de ces tiges par rapport auxdites broches.

Avantageusement aussi, la chaîne de transmission de positionnement entre ledit second moteur électrique et lesdites tiges est du type à engrenages, et est agencée pour faire pivoter ledit logement et son contenu, par rapport auxdites broches.

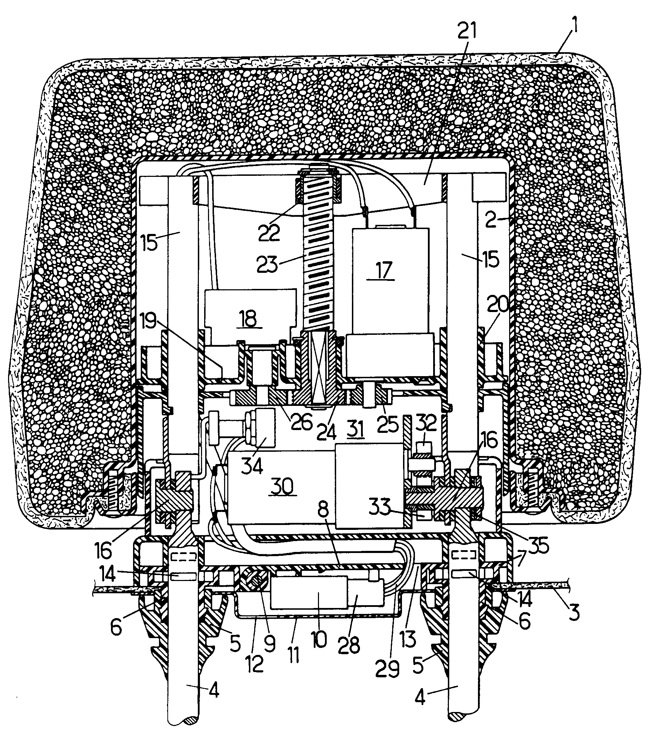

D'autres détails et avantages d'un appuie-tête conforme à l'invention vont apparaître à la lecture de la description qui va en être donnée ci-dessous à titre d'exemple nullement limitatif, avec référence à la figure unique du dessin ci-annexé, qui est une vue d'ensemble de cet appuie-tête, en coupe de face par l'axe des tiges de guidage et des broches.

Sur cette figure, les coussins de l'appuie-tête ont été référencés 1 et le boîtier qui les supporte en 2. Cet appuie-tête peut être fiché sur la partie supérieure d'un dossier 3 de siège, par exemple de véhicule automobile, à l'aide de deux broches 4 classiques, d'écartement standard, constituant en même temps, pour l'appuie-tête, une structure rigide de support et une référence pour son positionnement en hauteur et en inclinaison. Ces broches 4 sont engagées dans des douilles fixes du dossier, référencées en 5 et dans lesquelles sont encliquetées des douilles plus petites 6, venues de moulage avec une plaque de finition 7, laquelle enserre le tissu de revêtement du siège 3 entre elle et les flancs d'une plaque profilée 11, constituant un boîtier. Cette plaque 7 comporte une trappe de fermeture 8 mobile autour d'un axe 9 et permettant d'avoir accès à une embase de connexion 10 contenue dans ledit boîtier 11.

Ainsi, pour rendre opérationnel un appuie-tête conforme à l'invention, il suffira d'ouvrir la trappe 8, de brancher sur ladite embase de connexion 10 un connecteur 28 relié par un câblage interne 29 aux organes électriques situés à l'intérieur de l'appuie-tête, de refermer cette trappe puis de monter normalement l'appuie-tête en haut du dossier, grâce à ses broches 4, lesquelles sont encliquetées au niveau de la plaque 7 (voir encoches de préréglage en hauteur 14).

Le dossier du siège proprement dit n'aura ainsi qu'à contenir un câblage (non représenté) pour établir la liaison électrique entre l'embase de connexion 10 et les organes de commande d'inclinaison et de hauteur de l'appuie-tête, lesquels seront bien entendu disposés à portée de main de l'occupant du siège (par exemple sur un côté de l'assise). Il est à noter que ce câblage intérieur du dossier passe par une ouverture 12 de la plaque 11, tandis que le câblage 29 partant du connecteur précité 28 pour aller vers les moteurs internes passera par une ouverture 13 ménagée à l'extrémité de la trappe 8.

Sur les broches 4 sont respectivement articulées des tiges de guidage 15, ceci autour de pivots référencés en 16.

Le premier moteur électrique, référencé 17, et servant à la montée et à la descente de l'appuie-tête, est, ainsi que le potentiomètre associé 18, monté sur une embase de support 19 solidarisée du boîtier 2 et propre à coulisser grâce à des manchons 20 sur les tiges de guidage précitées 15. Ces tiges sont reliées à leur partie supérieure par un étrier d'entretoise 21 dans lequel est calé centralement un écrou 22 recevant une vis de manoeuvre 23. A l'extrémité inférieure de cette vis, qui est calée axialement par rapport à l'embase de support 19, est calé en rotation un pignon 24 en prise d'une part avec un pignon 25 calé sur l'arbre de sortie du moteur 17 et d'autre part avec un pignon 26 calé sur l'axe du potentiomètre 18.

Ainsi on comprend que lorsque la rotation du moteur 17 est commandée, dans un sens ou dans l'autre, à partir des organes de commande précités, la rotation de la vis 23 dans l'écrou fixe 22 fait monter ou descendre à volonté l'embase de support 19 ainsi que le boîtier 2 dont elle est solidaire. Lorsque la position voulue est atteinte, le curseur du potentiomètre 18 est à une tension représentative de cette position et qui peut être mise en mémoire ; cela permettra à un occupant donné du siège de retrouver immédiatement la position qui lui convient le mieux si le réglage a dans l'intervalle été modifié par une autre personne.

Il est bien entendu que le moteur 17 et le potentiomètre 18 montent et descendent en même temps que leur embase de support 19. Lorsque l'embase approche de sa position la plus haute, le moteur et le potentiomètre passent entre les branches de l'étrier fixe 21, suffisamment écartées l'une de l'autre à cet effet.

Pour faire pivoter les tiges de guidage 15, et donc l'appuie-tête, par rapport aux broches 4, on utilise un second moteur électrique 30, d'axe horizontal, disposé dans un logement 31 situé au-dessous de l'embase de support 19 ; le corps du moteur est fixe en rotation par rapport à ce logement 31 et donc par rapport à l'embase 19 et au boîtier 2 de l'appuie-tête. Sur l'arbre de sortie de ce second moteur est calé un pignon planétaire 32 en prise avec un pignon fixe 33, calé sur le pivot fixe 16 correspondant.

Ainsi, lorsque la rotation de ce second moteur 30 est commandée, dans un sens ou dans l'autre à partir des organes de commande dont il a été question plus haut (comprenant des interrupteurs de marche-arrêt, des inverseurs du sens de rotation des moteurs, etc.), le moteur et son logement 31 pivotent dans le sens correspondant, autour de l'axe des pivots 16, ce qui permet de conférer à l'appuie-tête l'inclinaison voulue. Ce second moteur 30 est associé également à un potentiomètre, référencé 34, qui a le même rôle de mémorisation que le précédent.

Il est à noter enfin que des rondelles de friction telles que 35 sont montées sur les pivots 16, entre les flasques correspondants, pour permettre une légère rotation de l'appuie-tête en cas de choc et éviter une détérioration des pignons en prise 32 et 33.

Un appuie-tête conforme à l'invention présente l'avantage d'être complètement interchangeable avec les appuie-tête classiques, non motorisés, ceci grâce à l'écartement standard de ses broches 4 et à son encombrement particulièrement réduit, tout à fait comparable à celui des appuie-tête classiques. Il intègre la totalité des organes actifs nécessaires à son fonctionnement, le siège n'ayant à recevoir qu'un câblage et les organes de commande. Cela facilite considérablement l'interchangeabilité de l'appuie-tête.

Quoique l'exemple de réalisation d'un appuie-tête conforme à l'invention ait été décrit avec une double commande électrique, il est bien entendu que l'invention conserverait encore son intérêt dans le cas où seule la commande en hauteur serait motorisée, la commande en inclinaison restant manuelle. Dans ce cas, le mécanisme de réglage de l'inclinaison resterait totalement masqué par le carter du logement 31, en lieu et place du moteur 30 et de son potentiomètre 34.

## Revendications

1. Appuie-tête électrique, notamment pour sièges de véhicules, comportant des moyens de fixation amovible, du type à broches coulissantes (4) d'écartement standard, permettant son montage à la partie supérieure du dossier (3) d'un siège, et associé à au moins un premier moteur électrique relié d'une part mécaniquement à une chaîne de transmission de positionnement en hauteur (22 à 25) d'un boîtier porte-coussins (2) et d'autre part, par une liaison électrique (29), à des organes de commande reliés à une source d'alimentation en courant et associés audit siège à portée des mains de son occupant, ledit premier moteur électrique (17) et la chaîne de transmission de positionnement en hauteur qui y est associée étant logés à l'intérieur dudit boîtier (2), caractérisé en ce que ladite chaîne de transmission de positionnement comporte un système vis-écrou (22, 23), ledit premier moteur électrique (17) étant supporté par une embase de support (19) montée coulissante sur deux tiges de guidage (15) solidaires desdites broches (4), l'arbre dudit premier moteur (17) s'étendant verticalement, et en ce que ladite liaison électrique (29) aboutit à un connecteur (28) propre à être branché sur une embase de connexion (10) fixée à demeure à ladite partie supérieure du dossier, ce dernier ne contenant que la partie de ladite liaison électrique qui s'étend entre ladite embase (10) et lesdits organes de commande.

2. Appuie-tête selon la revendication 1, caractérisé en ce qu'il comporte, en dessous et solidairement de ladite embase de support (19), un logement (31) pour un second moteur électrique (30), d'axe horizontal, relié mécaniquement auxdites tiges de guidage (15), lesquelles sont respectivement articulées sur lesdites broches (4) selon un axe virtuel horizontal, pour la commande de l'inclinaison de ces tiges par rapport auxdites broches.

3. Appuie-tête selon la revendication 2, caractérisé en ce que la chaine de transmission de positionnement entre ledit second moteur électrique (30) et lesdites tiges (15) est du type à engrenages (32, 33), et est agencée pour faire pivoter ledit logement (31) et son contenu, par rapport auxdites broches (4).

## Claims

1. Electric headrest, notably for vehicle seats, including removable fixing means, of the type having sliding rods (4) with standard spacing, enabling it to be mounted on the top part of the backrest (3) of a seat, and associated with at least a first electric motor connected on the one hand mechanically to a transmission linkage (22 to 25) for positioning a cushion-holder casing (2) in height and, on the other hand, by means of an electrical connection (29), to control devices connected to a current supply source and associated with the said seat within reach of the hands of its occupant, the said first electric motor (17) and the height-positioning transmission linkage associated therewith being housed inside the said casing (2), characterised in that the said positioning transmission linkage includes a nut-and-screw system (22, 23), the said first electric motor (17) being supported by a support base (19) slidably mounted on two guide stalks (15) fixed to the said rods (4), the shaft of the said first motor (17) extending vertically, and in that the said electrical connection (29) ends at a connector (28) suitable for being plugged into a connection box (10) permanently fixed to the said top part of the backrest, this containing only the part of the said electrical connection which extends between the said box (10) and the said control devices.

2. Headrest according to Claim 1, characterised in that it includes, underneath and fixed to the said support base (19), a housing (31) for a second electric motor (30), with a horizontal axis, connected mechanically to the said guide stems (15), which are respectively articulated on the said rods (4) on a horizontal virtual axis, for controlling the angle of these stems with respect to the said rods.

3. Headrest according to Claim 2, characterised in that the transmission linkage for the relative positioning of the said second electric motor (30) and the said stems (15) is of the type having gears (32, 33), and is arranged so as to cause the said housing (31) and its contents to pivot with respect to the said rods (4).

## Patentansprüche

1. Elektrisch betätigbare Kopfstütze, insbesondere für Kraftfahrzeugsitze, die Einrichtungen zur lösbaren Befestigung der Bauart mit verschiebbaren, in einem festgelegten Abstand angeordneten Zapfen (4) enthält, mit denen die Montage der Kopfstütze am oberen Teil der Rückenlehne (3) eines Sitzes erfolgt und an die wenigstens ein erster Elektromotor angeschlossen ist, der einerseits mechanisch mit einer Übertragungskette (22-25) für die Höhenverstellung eines Gehäuses (2) zum Halten des Polsters und andererseits über eine elektrische Verbindung (29) mit Steuerorganen verbunden ist, die an eine Stromquelle angeschlossen und in Reichweite des Fahrzeuginsassen mit dem Sitz verbunden sind, wobei der erste Elektromotor (17) und die Übertragungskette für die Höhenverstellung, die daran angeschlossen ist, im Inneren des Gehäuses (2) angeordnet sind, dadurch gekennzeichnet, daß die Übertragungskette für die Verstellung aus einem Schrauben/Mutter-System (22, 23) besteht, daß der erste Elektromotor (17) durch einen Stützsockel (19) gehalten wird, der verschiebbar an zwei festen Führungsstangen (15) der Zapfen (4) befestigt ist, wobei sich die Welle des ersten Motors (17) in senkrechter Richtung erstreckt und daß die elektrische Verbindung (29) in einem Stecker (28) mündet, der in einen Steckverbinder (10) einsteckbar ist, der ständig an dem oberen Abschnitt der Rückenlehne befestigt ist, wobei die Rückenlehne nur den Teil der elektrischen Verbindung enthält, der sich zwischen dem Steckverbinder (10) und den Steuerorganen erstreckt.

2. Kopfstütze nach Anspruch 1, dadurch gekennzeichnet, daß sie unterhalb des Stützsockels und aus einem Stück mit diesem bestehend ein Lagergehäuse (31) für einen zweiten Elektromotor (30) mit horizontal verlaufender Achse enthält, der mechanisch mit den Führungsstangen (15) verbunden ist, die jeweils gelenkig gemäß einer virtuellen horizontalen Achse an den Zapfen (4) angebracht sind, um die Neigung der Stangen in bezug auf die Zapfen zu steuern.

3. Kopfstütze nach Anspruch 2, dadurch gekennzeichnet, daß die übertragungskette für die Verstellung zwischen dem zweiten Elektromotor (30) und den Stangen (15) eine Eingriff- oder Getriebekette (32, 33) ist und daß diese so ausgebildet ist, daß sie das Lagergehäuse (31) und dessen Teile gegenüber den Zapfen (4) verschwenken kann.
